# EUROPÄISCHE PATENTSCHRIFT

(11) **EP 0 722 859 B1**
(45) Veröffentlichungstag und Bekanntmachung des Hinweises auf die Patenterteilung: **10.03.1999**
(21) Anmeldenummer: 95117371.5
(22) Anmeldetag: 04.11.1995
(51) Int. Cl.: B60R 21/13

(54) **Kassettenartiges Überrollschutzvorrichtungs-Modul**
Cassette-like roll-over protection module
Module à cassette pour dispositif de protection par arceau

(30) Priorität: 20.01.1995 DE 19501584
(43) Veröffentlichungstag der Anmeldung: 24.07.1996
(73) Patentinhaber: Dr.Ing.h.c. F. Porsche Aktiengesellschaft, 70435 Stuttgart (DE)
(72) Erfinder: Henn, Uwe, D-71299 Wimsheim (DE)

(56) Entgegenhaltungen:
- EP-A- 0 407 741
- EP-A- 0 623 492
- DE-C- 4 100 506
- US-A- 5 018 780

## Beschreibung

Die Erfindung bezieht sich auf ein Kraftfahrzeug, mit einem Verdeck und einer hinter den Sitzen angeordneten Überrollschutzvorrichtung, die zumindest eine vorgefertigte, einen Schutzbügel und einen Aktuator enthaltende Kassette und einen Überrollsensor umfaßt, wobei die Kassette an einer Aufnahme festlegbar ist.

Bei einem bekannten Kraftfahrzeug der eingangs genannten Gattung (neues 3-er Cabrio von BMW, interne Modellbezeichnung E 36) sind hinter den Fondsitzen in den Fahrzeugaufbau integrierte, kastenförmige Aufnahmen für die beiden vorgefertigten Kassetten vorgesehen, wobei die Aufnahmen durch eine feststehende, querverlaufende Trennwand und mit dieser verbundene gehäuseartige Schließteile gebildet werden. Die beiden Schließteile sind auf der dem Fahrgastraum zugekehrten Seite der Trennwand beiderseits einer Durchladeöffnung auf die Trennwand aufgesetzt und mit dieser verbunden.

Die vorgefertigten, jeweils einen ausfahrbaren Schutzbügel und einen Aktuator enthaltenden Kassetten sind von oben in die Aufnahmen eingesetzt und werden danach im Fahrzeug an den Aufnahmen befestigt. Anschließend wird der Überrollsensor durch eine vordere Öffnung der Aufnahme eingesetzt und am Gehäuse der Kassette angeschraubt.

Dieser Anordnung haftet der Nachteil an, daß die Funktion der Überrollschutzvorrichtung erst nach vollständigem Einbau in das Fahrzeug prüfbar ist, nicht hingegen außerhalb des Fahrzeuges. Ferner sind zur Herstellung der Aufnahme aufwendige, kostenintensive Blechpreßwerkzeuge erforderlich und die Montage der Überrollschutzvorrichtung am Fahrzeugband ist zeitintensiv.

Aufgabe der Erfindung ist es, eine Aufnahme für eine zumindest eine vorgefertigte Kassette enthaltende Überrollschutzvorrichtung so zu gestalten, daß bei kostengünstiger Herstellung bereits außerhalb des Fahrzeuges eine Überprüfung der Funktion der Überrollschutzvorrichtung vorgenommen werden kann und zugleich die Montagezeit am Fahrzeugband wesentlich reduziert wird.

Erfindungsgemäß wird diese Aufgabe durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Zusammenfassung der Aufnahme und der Bauteile des Überrollschutzsystems zu einem außerhalb des Fahrzeuges hergestellten, vorverkabelten und funktionsfähigem Modul einerseits eine Funktionsprüfung der Überrollschutzvorrichtung bereits vor dem Einbau in das Fahrzeug gewährleistet ist und daß andererseits die Montagezeit für die Aufnahme und das Überrollschutzsystem am Band wesentlich verkürzt wird. Die Aufnahme wird durch einen formsteifen, aus Hohlprofilen zusammengesetzten Tragrahmen gebildet, der durch die Verwendung von Strangpreßprofilteilen aus einer Leichtmetallegierung kostengünstig ist und ein geringes Gewicht aufweist. Der Tragrahmen ist vorzugsweise an eine darunterliegende Trägerstruktur des Aufbaus angeschlossen und bewirkt eine wesentliche Versteifung des Hinterwagens bzw. eine wesentliche Erhöhung der Torsionssteifigkeit.

In das vorgefertigte Modul sind vorzugweise weitere Aggregate integriert, wie Steuergeräte für die Motronic und/oder die Tiptronic und/oder das Verdeck. Ferner können Bauteile der Zentralelektrik sowie des Verdeckantriebs am Tragrahmen des Moduls angebracht werden, was die Montagezeit weiter reduziert.

Ferner ist eine querverlaufende Verkleidung oberhalb des Tragrahmens angeordnet und fest mit dem Tragrahmen verbunden, was eine Montageerleichterung darstellt.

Am Tragrahmen vorgesehene Anschläge dienen als Auflage für das abgelegte Verdeck.

Ein Ausführungsbeispiel der Erfindung ist in den Zeichnungen dargestellt und wird im folgenden näher beschrieben.

Es zeigt
- Fig. 1: eine perspektivische Ansicht von schräg vorne auf einen fondseitigen Bereich des Fahrgastraumes und einen anschließenden Heckbereich eines Kraftfahrzeuges mit einem vorgefertigten Modul,
- Fig. 2: eine Ansicht von schräg vorne auf den vorgefertigten Modul,

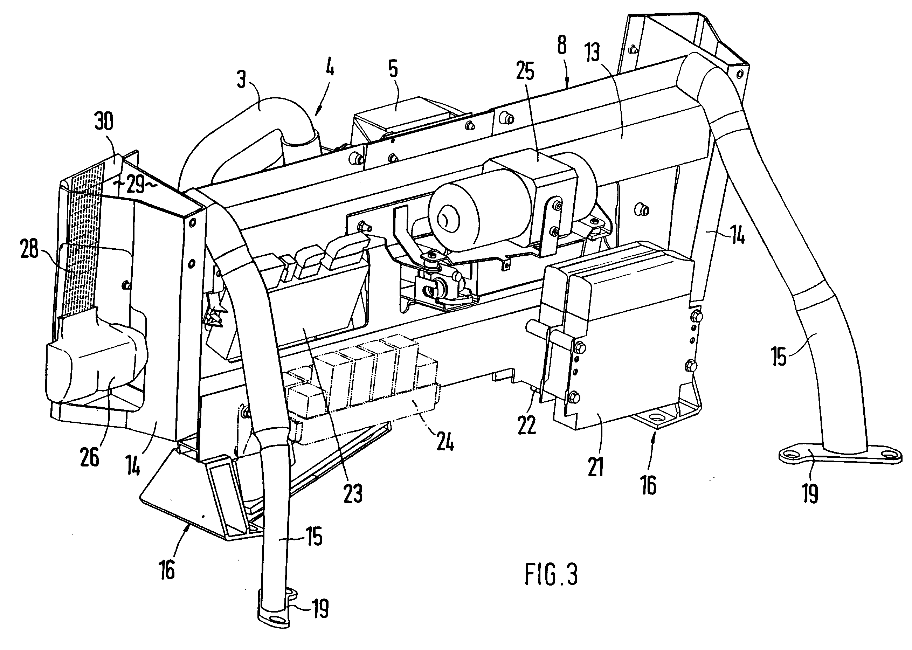

- Fig. 3: eine Ansicht von schräg hinten auf den vorgefertigten Modul.

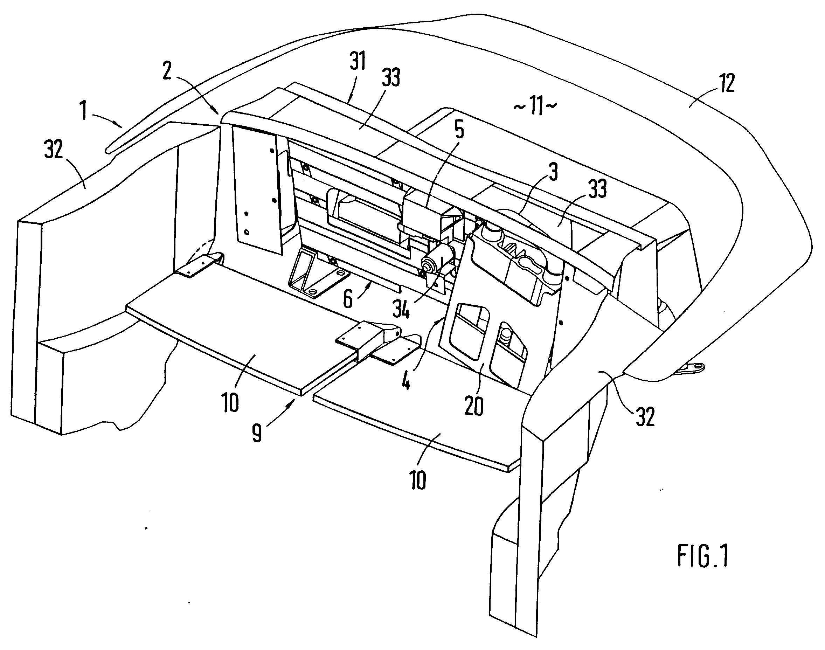

Fig. 1 zeigt einen Teilbereich eines durch ein Cabriolet gebildeten Kraftfahrzeuges 1, wobei das zweitürige Cabriolet ein nicht näher dargestelltes Verdeck und eine hinter den Sitzen angeordnete Überrollschutzvorrichtung 2 aufweist. Die Überrollschutzvorrichtung 2 umfaßt zumindest eine vorgefertigte, einen ausfahrbaren Schutzbügel 3 und einen Aktuator enthaltende Kassette 4 sowie einen Überrollsensor 5, wobei die Kassette 4 an einer Aufnahme 6 festlegbar ist.

Erfindungsgemäß sind die Aufnahme 6 und zumindest die Bauteile der Überrollschutzvorrichtung 2 zu einem außerhalb des Fahrzeuges hergestellten, vorverkabelten, funktionsfähigen Modul 7 zusammengefaßt.

Die Aufnahme 6 wird durch einen querverlaufenden Tragrahmen 8 gebildet, der hinter den hinteren Sitzen 9 des Kraftfahrzeuges 1 angeordnet und am darunterliegenden Aufbau in Lage gehalten ist.

Die beiden hinteren Sitze 9 weisen klappbare Rückenlehnen 10 auf, die gemäß Fig. 1 eine heruntergeklappte horizontale Lage einnehmen.

Der sich über einen wesentlichen Teil der Breite des Fahrzeuginnenbreite erstreckende Tragrahmen 8 trennt den Fahrgastraum vom dahinterliegenden heckseitigen Aufnahmeraum 11 für das Verdeck. Der Aufnahmeraum 11 ist zumindest abschnittsweise durch einen Verdeckkastendeckel 12 nach oben hin abgedeckt.

Der Tragrahmen 8 setzt sich aus einem querverlaufenden Hohlprofil 13, zwei seitlich außenliegenden aufrechten Säulenabschnitten 14 und zwei heckseitigen Abstützelementen 15 zusammen. Das querverlaufende Hohlprofil 13 ist an seinem unteren Rand von zwei Halteböcken 16 getragen, die an einem darunterliegenden, nicht näher dargestellten Längsträger des Aufbaus befestigt sind. Die Befestigung erfolgt durch Schrauben, Schweißen oder dgl.

Das querverlaufende Hohlprofil 13 ist aus Gewichtsgründen örtlich mit zumindest einer Aussparung 17 versehen.

Die einzelnen Bauteile 13, 14, 15, 16 des Tragrahmens 8 werden im Ausführungsbeispiel durch kostengünstig herstellbare Strangpreßprofilteile aus einer Leichtmetallegierung gebildet, die miteinander verbunden sind.

Die sich vom oberen seitlich außenliegenden Rand 18 des Hohlprofils 13 nach hinten und unten hin erstreckenden Abstützelemente 15 werden beispielsweise durch gebogene Rohre gebildet. Am hinteren, unteren Endbereich der Abstützelemente 15 ist eine Montageplatte 19 angebracht, die über Schrauben oder dgl. am darunterliegenden Aufbau befestigt ist. Die Rohre können über ihre Längserstreckung gesehen einen unterschiedlichen Querschnitt aufweisen. Dies wird beispielsweise durch örtliches, hydraulisches Aufweiten (Innenhochdruckverfahren) erreicht.

Der Tragrahmen 8 verleiht der Fahrzeugkarosserie insbesondere im Heckbereich eine erheblich erhöhte Torsionssteifigkeit.

Im Ausführungsbeispiel sind am querverlaufenden Hohlprofil 13 zwei vorgefertigte, funktionsfähige Kassetten 4 der Überrollschutzvorrichtung 2 sowie ein Überrollsensor 5 befestigt (nur eine Kassette 4 dargestellt). Die beiden Kassetten 4 sind jeweils schräg am Tragrahmen 8 angebracht, dergestalt, daß das der Fahrzeuglängsmittelebene zugekehrte obere Ende höher liegt als das seitlich außenliegende obere Ende der Kassette 4.

Jede Kassette 4 umfaßt im wesentlichen einen ausfahrbaren Schutzbügel 3, der in einem Gehäuse 20 gelagert ist.

Ferner ist in jede Kassette 4 ein nicht näher dargestellter Aktuator integriert, der einen einfach wirkenden Elektromagneten umfaßt, welcher direkt den Auslösehebel betätigt.

Durch die Anbringung der vorgefertigten, funktionsfähigen Bauteile der Überrollschutzvorrichtung 2 und deren Vorverkabelung wird erreicht, daß die Überrollschutzvorrichtung 2 außerhalb des Fahrzeuges bereits prüffähig ist, d.h., es kann geprüft werden, unter welchen Bedingungen die Überrollschutzvorrichtung 2 auslöst.

Ferner können am Tragrahmen 8 zusätzliche Aggregate befestigt und somit außerhalb des Fahrzeuges vormontiert werden.

Im Ausführungsbeispiel sind Steuergeräte 21, 22, 23 für die Motronic, die Tiptronic, das Verdeck, Bauteile der Zentralelektrik 24 sowie hydraulische und/oder elektrische Aggregate 25 des Verdeckantriebs am Tragrahmen 8 festgelegt. Die seitlich außenliegenden, aufrechten Säulenabschnitte 14 nehmen innerhalb ihres Hohlraumes 29, und zwar in einem untenliegenden Endbereich, jeweils einen Gurtaufroller 26 eines Sicherheitsgurtsystems 27 auf. Das Gurtband 28 wird innerhalb des Hohlraumes 29 nach oben geführt und über ein aufgestecktes Umlenkelement 30 umgelenkt.

Ferner trägt der Tragrahmen 8 eine darüberliegende, querverlaufende, etwa horizontal ausgerichtete Verkleidung 31, die seitlich an die beiden Fondseitenverkleidungen 32 anschließt. Die Verkleidung 31 weist im Bereich des darunterliegenden ausfahrbaren Schutzbügels 3 eingesetzte Deckelabschnitte 33 auf, die beim Ausfahren der Schutzbügel 3 nach oben bewegt werden.

Darüber hinaus sind am Tragrahmen 8 örtlich Anschläge angebracht, an denen sich ein formsteifer vorderer Verdeckabschnitt des Verdecks in seiner zurückgeklappten Stellung abstützt.

Durch den vorgefertigten Modul 7 erfolgt eine bandunabhängige Vormontage und es wird eine Prüffähigkeit der Überrollschutzvorrichtung 2 außerhalb des Fahrzeuges erzielt.

Durch Montage des Tragrahmens 8 mit der Überrollschutzvorrichtung 2 auf einem Prüftisch, der um eine Längs- und Querachse schwenkbar ist, kann geprüft werden, ob bei den Soll-Drehwinkeln der Überrollsensor 5 den Schutzbügel 3 aktiviert.

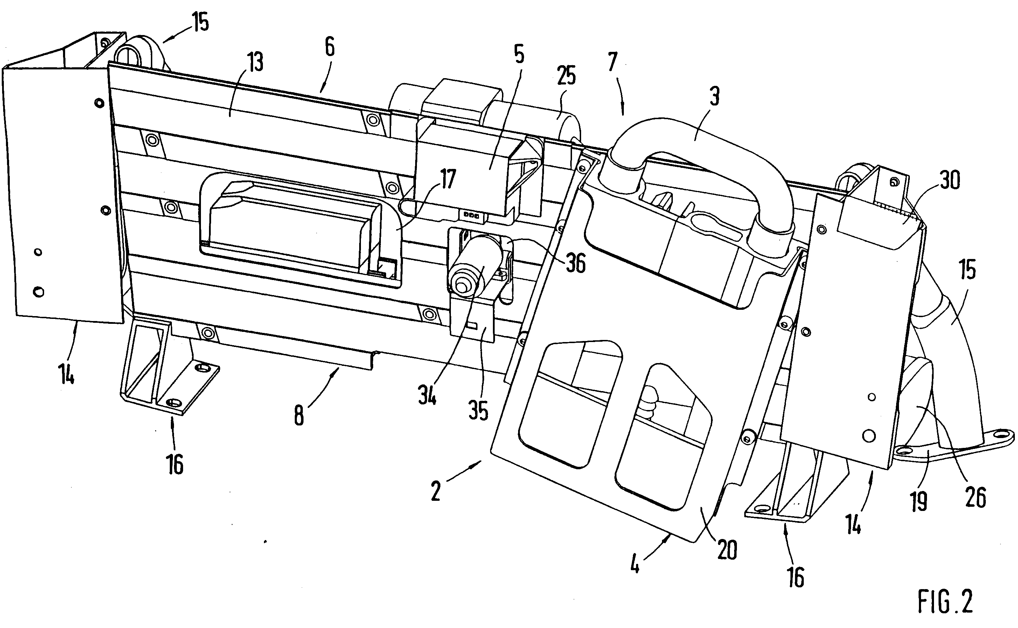

Ferner ist in den Fig. 1 und 2 noch ein Motor 34 für den Verdeckkastendeckelantrieb gezeigt. Dieser ist unter Zwischenschaltung eines Halters 35 im Bereich einer Aussparung 36 angeordnet.

## Patentansprüche

1. Kraftfahrzeug, insbesondere Cabriolet, mit einem Verdeck und einer hinter den Sitzen angeordneten Überrollschutzvorrichtung, die zumindest eine vorgefertigte, einen Schutzbügel und einen Aktuator enthaltende Kassette und einen Überrollsensor umfaßt, wobei die vorgefertigte Kassette an einer Aufnahme festlegbar ist, **dadurch gekennzeichnet,** daß die zumindest eine einen Schutzbügel (3) und einen Aktuator enthaltende Kassette (4) sowie der Überrollsensor (5) außerhalb des Fahrzeugs an einem die Aufnahme (6) bildenden Tragrahmen (8) befestigt sind und ein vorverkabeltes, funktionsfähiges Modul (7) bilden, das am Fahrzeugaufbau festlegbar ist.

2. Kraftfahrzeug nach Anspruch 1, **dadurch gekennzeichnet,** daß sich der in Fahrzeugquerrichtung erstreckende Tragrahmen (8) über einen wesentlichen Teil der Fahrzeuginnenbreite erstreckt.

3. Kraftfahrzeug nach den Ansprüchen 1 und 2, **dadurch gekennzeichnet,** daß sich der Tragrahmen (8) im wesentlichen aus einem großflächigen, querverlaufenden Hohlprofil (13), zwei seitlich außenliegenden Säulenabschnitten (14) und zwei heckseitigen Abstützelementen (15) zusammensetzt.

4. Kraftfahrzeug nach Anspruch 3, **dadurch gekennzeichnet,** daß die seitlichen, aufrechten Säulenabschnitte (14) beiderseits an das querverlaufende Hohlprofil (13) angeschlossen und fest mit diesem verbunden sind, wobei die Säulenabschnitte (14) nach oben und unten hin offen ausgebildet sind.

5. Kraftfahrzeug nach einem oder mehreren der vorangegangenen Ansprüche, **dadurch gekennzeichnet,** daß das querverlaufende Hohlprofil (13) von beabstandet angeordneten Halteböcken (16) getragen ist, wobei die Halteböcke (16) am darunterliegenden Aufbau festsetzbar sind.

6. Kraftfahrzeug nach den Ansprüchen 1 bis 5, **dadurch gekennzeichnet,** daß die beiden Kassetten (4) der Überrollschutzvorrichtung (2) schräg am querverlaufenden Hohlprofil (13) des Tragrahmens (8) angebracht sind, dergestalt, daß die der Fahrzeuglängsmittelebene zugekehrten oberen Ränder der Kassetten (4) höher liegen als die oberen außenliegenden Ränder der Kassetten (4).

7. Kraftfahrzeug nach Anspruch 1, **dadurch gekennzeichnet,** daß am vorgefertigten Modul (7) zusätzliche Aggregate anbringbar sind.

8. Kraftfahrzeug nach Anspruch 7, **dadurch gekennzeichnet,** daß am vorgefertigten Modul (7) Steuergeräte (21, 22, 23) für die Motronic und/oder die Tiptronic und/oder das Verdeck angebracht sind.

9. Kraftfahrzeug nach Anspruch 7, **dadurch gekennzeichnet,** daß am vorgefertigten Modul (7) Bauteile der Zentralelektrik (24) des Kraftfahrzeuges befestigt sind.

10. Kraftfahrzeug nach Anspruch 7, **dadurch gekennzeichnet,** daß am vorgefertigten Modul Aggregate des Verdeckantriebs (25) in Lage gehalten sind.

11. Kraftfahrzeug nach Anspruch 7, **dadurch gekennzeichnet,** daß in das vorgefertigte Modul (7) einzelne Bauteile eines Sicherheitsgurtsystems (27) integriert sind.

12. Kraftfahrzeug nach Anspruch 11, **dadurch gekennzeichnet,** daß innerhalb des Hohlraumes der aufrechten Säulenabschnitte (14) Gurtaufroller (26) des Sicherheitsgurtsystems (27) angebracht sind und daß am oberen Rand jedes Säulenabschnitts (14) ein Umlenkelement (30) für das zum Gurtaufroller (26) geführte Gurtband (28) vorgesehen ist.

13. Kraftfahrzeug nach einem oder mehreren der vorangegangenen Ansprüche, **dadurch gekennzeichnet,** daß oberhalb des Tragrahmens (8) eine querverlaufende, etwa horizontal ausgerichtete Verkleidung (31) vorgesehen ist, die eine Querverbindung zu den längsverlaufenden Fondseitenverkleidungen (32) bildet und die abschnittsweise am darunterliegenden Tragrahmen (8) abgestützt ist.

14. Kraftfahrzeug nach einem oder mehreren der vorangegangenen Ansprüche, **dadurch gekennzeichnet,** daß am Tragrahmen (8) örtlich Anschläge vorgesehen sind, an denen ein vorderer, formsteifer Verdeckabschnitt des zurückgeklappten Verdecks in seiner Ablagestellung aufliegt.

15. Kraftfahrzeug nach einem oder mehreren der vorangegangenen Ansprüche, **dadurch gekennzeichnet,** daß die einzelnen Teile des Tragrahmens (8) durch Strangpreßprofilteile aus einer Leichtmetallegierung gebildet werden.

## Claims

1. A motor vehicle, in particular a cabriolet, with a folding top and a roll-over protection device which is arranged behind the seats and which comprises at least one pre-fabricated cartridge, containing a protective hoop and an actuator, and a roll-over sensor, wherein the pre-fabricated cartridge can be secured to a receiving means, **characterized in that** the at least one cartridge (4), containing a protective hoop (3) and an actuator, and the roll-over sensor (5) are secured outside the vehicle to a support frame (8) forming the receiving means (6) and they form a pre-wired, operative module (7) which can be secured to the vehicle body.

2. A motor vehicle according to Claim 1, **characterized in that** the support frame (8) extending in the transverse direction of the vehicle extends over a substantial part of the interior width of the vehicle.

3. A motor vehicle according to Claims 1 and 2, **characterized in that** the support frame (8) is essentially formed by a transversely extending hollow section (13) of large area, two column portions (14) situated laterally on the outside and two support members (15) at the rear.

4. A motor vehicle according to Claim 3, **characterized in that** the lateral upright column portions (14) are attached to both sides of the transversely extending hollow section (13) and are securely connected thereto, wherein the column portions (14) are open at the top and the bottom.

5. A motor vehicle according to one or more of the preceding Claims, **characterized in that** the transversely extending hollow section (13) is supported by spaced retaining stands (16), wherein the retaining stands (16) can be secured to the body situated thereunder.

6. A motor vehicle according to Claims 1 to 5, **characterized in that** the two cartridges (4) of the roll-over protection device (2) are attached obliquely to the transversely extending hollow section (13) of the support frame (8), in such a way that the upper edges of the cartridges (4) facing the longitudinal median plane of the vehicle are situated at a higher level than the upper edges of the cartridges (4) towards the outside.

7. A motor vehicle according to Claim 1, **characterized in that** additional units can be attached to the pre-fabricated module (7).

8. A motor vehicle according to Claim 7, **characterized in that** control appliances (21, 22, 23) for the Motronic and/or the Tiptonic and/or the folding top are attached to the pre-fabricated module (7).

9. A motor vehicle according to Claim 7, **characterized in that** components of the central electrics (24) of the motor vehicle are secured to the pre-fabricated module (7).

10. A motor vehicle according to Claim 7, **characterized in that** units of the folding-top drive (25) are held in position on the pre-fabricated module.

11. A motor vehicle according to Claim 7, **characterized in that** individual components of a seat-belt system (27) are integrated in the pre-fabricated module (7).

12. A motor vehicle according to Claim 11, **characterized in that** belt retractors (26) of the seat-belt system (27) are arranged inside the cavity of the upright column portions (14), and a reversing member (30) for the belt (28) leading to the belt retractor (26) is provided on the upper edge of each column portion (14).

13. A motor vehicle according to one or more of the preceding Claims, **characterized in that** a transversely extending covering (31), which is orientated substantially horizontally and which forms a transverse connexion to the longitudinally extending rear side coverings (32) and is supported in part on the support frame (8) situated thereunder, is provided above the support frame (8).

14. A motor vehicle according to one or more of the preceding Claims, **characterized in that** stops, on which a front, dimensionally rigid folding-top portion of the folded-down top rests in its fold-down position, are provided locally on the support frame (8).

15. A motor vehicle according to one or more of the preceding Claims, **characterized in that** the individual parts of the support frame (8) are formed by extruded-section parts of a light-metal alloy.

## Revendications

1. Véhicule automobile, en particulier cabriolet, avec une capote et un dispositif de protection au retournement, disposé derrière les sièges, qui comprend au moins une cassette préfabriquée, contenant un arceau de protection et un actionneur, ainsi qu'un capteur de retournement, la cassette préfabriquée pouvant être fixée sur un support, caractérisé en ce que la ou les cassettes (4), contenant un arceau de protection (3) et un actionneur, ainsi que le capteur de retournement (5) sont fixés à l'extérieur du véhicule, sur un cadre de support (8) formant le logement (6), et forment un module (7), précâblé, capable de fonctionner, qui peut être fixé sur la carrosserie du véhicule.

2. Véhicule automobile selon la revendication 1, caractérisé en ce que le cadre de support (8), s'étendant dans la direction transversale du véhicule, s'étend sur une partie essentielle de la largeur intérieure du véhicule.

3. Véhicule automobile selon les revendications 1 et 2, caractérisé en ce que le cadre de support (8) se compose essentiellement d'un profilé creux (13) de grande surface, s'étendant transversalement, de deux portions de montant (14) situées latéralement à l'extérieur et de deux éléments d'appui (15) arrière.

4. Véhicule automobile selon la revendication 3, caractérisé en ce que les portions de montant (14) verticales, latérales, sont raccordées des deux côtés au profilé creux (13) s'étendant transversalement et sont assemblées fixement avec celui-ci, les portions de montant (14) étant ouvertes vers le haut et vers le bas.

5. Véhicule automobile selon une ou plusieurs des revendications précédentes, caractérisé en ce que le profilé creux (13) s'étendant transversalement est porté par des chevalets (16) disposés espacés, les chevalets (16) pouvant être fixés sur la carrosserie située au-dessous.

6. Véhicule automobile selon les revendications 1 à 5, caractérisé en ce que les deux cassettes (4) du dispositif de protection au retournement (2) sont montées obliquement sur le profilé creux (13) s'étendant transversalement du cadre de support (8), de manière que les bords supérieurs des cassettes (4), tournés vers le plan médian longitudinal du véhicule, se trouvent plus haut que les bord supérieurs des cassettes (4), situés à l'extérieur.

7. Véhicule automobile selon la revendication 1, caractérisé en ce que des ensembles supplémentaires peuvent être montés sur le module (7) préfabriqué.

8. Véhicule automobile selon la revendication 7, caractérisé en ce que des appareils de commande (21, 22, 23) sont montés sur le module (7) préfabriqué, pour la motronique et/ou la tiptronique et/ou la capote.

9. Véhicule automobile selon la revendication 7, caractérisé en ce que des composants de la centrale électrique (24) du véhicule automobile sont fixés sur le module préfabriqué.

10. Véhicule automobile selon la revendication 7, caractérisé en ce que des ensembles du dispositif d'entraînement de la capote (25) sont maintenus en position sur le module préfabriqué.

11. Véhicule automobile selon la revendication 7, caractérisé en ce que des composants individuels d'un système de ceinture de sécurité (27) sont intégrés dans le module (7) préfabriqué.

12. Véhicule automobile selon la revendication 11, caractérisé en ce qu'à l'intérieur de la cavité des portions de montant (14) verticales, sont montés des enrouleurs de ceinture (26) du système de ceinture de sécurité (27) et en ce qu'un élément de renvoi (30) pour la sangle (28), guidée vers l'enrouleur de ceinture (26), est prévu sur le bord supérieur de chaque portion de montant (14).

13. Véhicule automobile selon une ou plusieurs des revendications précédentes, caractérisé en ce qu'au-dessus du cadre de support (8) est prévu un revêtement (31) s'étendant transversalement, orienté à peu près horizontalement, qui réalise une liaison transversale avec les revêtements (32) des parties latérales arrière s'étendant longitudinalement et qui est soutenu par endroits sur le cadre de support (8) situé au-dessous.

14. Véhicule automobile selon une ou plusieurs des revendications précédentes, caractérisé en ce que sur le cadre de support (8) sont prévues localement des butées, contre lesquelles repose une portion de capote rigide, avant, de la capote rabattue dans sa position de rangement.

15. Véhicule automobile selon une ou plusieurs des revendications précédentes, caractérisé en ce que les divers éléments du cadre de support (8) sont formés par des éléments profilés extrudés en alliage de métaux légers.
